# EUROPEAN PATENT SPECIFICATION

(11) **EP 1 694 533 B1**
(45) Date of publication and mention of the grant of the patent: **04.04.2007**
(21) Application number: 04808765.4
(22) Date of filing: 06.12.2004
(51) Int. Cl.: B60Q 1/30, B60P 1/44, F21S 8/00

(54) **LIGHTING DEVICE AND METHOD FOR LIGHTING A LOADING FLAP**
BELEUCHTUNGSVORRICHTUNG UND VERFAHREN ZUR BELEUCHTUNG EINER LASTKLAPPE
PROCEDE ET DISPOSITIF D'ECLAIRAGE POUR ECLAIRER UNE PLATE-FORME DE CHARGEMENT

(30) Priority: 11.12.2003 NL 1024989
(43) Date of publication of application: 30.08.2006
(73) Proprietor: Van Ouwerkerk, Harold, 7316 DJ Apeldoorn (NL); Van Ouwerkerk-Van Saarloos, Tanny, 7316 DJ Apeldoorn (NL)
(72) Inventor: Van Ouwerkerk, Harold, 7316 DJ Apeldoorn (NL); Van Ouwerkerk-Van Saarloos, Tanny, 7316 DJ Apeldoorn (NL)
(74) Representative: Land, Addick Adrianus Gosling
(86) International application number: PCT/NL2004/000849
(87) International publication number: WO 2005/056334

(56) References cited:
- DE-A- 3 836 032
- DE-A- 4 330 521
- DE-U- 9 209 670
- DE-U- 29 800 252
- FR-A- 2 836 876
- US-A- 2 191 379
- US-A- 2 359 151

## Description

The present invention relates to a lighting device, for instance for a loading flap, comprising a base member for arranging thereof on the loading flap, a lamp arranged on the base member and a window for transmitting the light from the lamp.

Such a lighting device is known from DE-38 36 032-A1 and is marketed for instance by the company Hella as warning light for the loading flap of a truck. In addition to the base part, the known device comprises a cover part between which is arranged a window 1 cm high and about 10 cm wide through which a lamp arranged between the base part and the cover part can emit light. Such a known device is arranged close to the corner points of a loading flap to draw the attention of other road-users to the loading flap when it is rotated into an open position, i.e. into horizontal position.

The light emitted by the known device exits however in a directed, relatively narrow beam, whereby a plurality of lighting units is necessary. The beam can only be seen in a rearward direction parallel to the longitudinal axis of the truck, so that traffic from the sides can still collide with or run up against the loading flap, which can result in serious accidents. These accidents occur for instance when motorized two-wheelers, such as mopeds and motorcycles, collide at high speed with the thin loading flap which is difficult to see and relatively sharp.

Document DE 298 00 252-U discloses a highting device provided with a base member for arranging thereof on a loading flap of a truck.

A further lighting device is a loading flap lamp supplied by the company Stama, which device radiates light all around for a better visibility. This lamp has the drawback however that a relatively intense beam is emitted in upward direction, whereby the driver of the truck, during unloading thereof, is dazzled by the warning lights on the loading flap.

Yet another known device is supplied under the name Hula-Blitz. This device greatly resembles the Hella device, with the difference that it is provided with twelve LEDs and is shorter. The LEDs emit light in a relatively narrow beam of about 60°. In addition, the light output is lower than that of an incandescent lamp. In order to nevertheless transmit as much light as possible, the window is relatively thin, about 1 mm, whereby the device is weak. The window can for instance already break after a truck with 100 kg wheel pressure has travelled over it one or twice.

The present invention has for its object to obviate the drawbacks of the above described known lighting devices by providing an improved lighting device.

The present invention provides to this end a lighting device, for instance for a loading flap, comprising:
- a base member for arranging thereof on the loading flap;
- a lamp arranged on the base member;
- a cover arranged over the lamp for covering thereof; and
- a light-transmitting window arranged over at least a quarter of the periphery of the base member between the base member and the cover for the purpose of defining a desired exit direction for light.

The lighting device according to the present invention emits light in all desired directions, so that a loading flap is more readily visible for the purpose of increasing safety and preventing and reducing accidents. The cover part blocks the emitted light in upward direction so that the truck driver can load and unload the truck without being dazzled.

In a preferred embodiment, the lighting device comprises a mirror element arranged on a rear side of the lamp for reflecting in the direction of the window the light emitted by the lamp. The light is beamed by the mirror element, which results in greater efficiency and makes it possible to direct the light better.

In a further preferred embodiment, the window is arranged over about 120° of the periphery of the base member. Such a window ensures that the light makes a desired exit angle in the width direction of the window. The light is hereby radiated in all desired directions in the width direction of the window, so that traffic approaching from the rear and the side of the loading flap is alerted for the purpose of greater safety.

In yet another preferred embodiment, the window has a height of between 5 mm and 40 mm. Such a height provides a desired exit angle in height direction of the window.

In a preferred embodiment, the light exiting from the window makes an angle of less than 60° in the height direction of the window. Such a relatively small angle of the exiting light in height direction of the window prevents those loading and unloading the truck being dazzled by the light emitted by the lighting device.

In a further preferred embodiment, the light exiting from the window makes an angle greater than 120° in the width direction of the window. Such an angle is found to be suitable for radiating warning signals in both rearward and lateral direction of the loading flap. The beam of known lighting devices is considerably narrower, whereby it is only visible from a single direction.

In yet another preferred embodiment, the lamp is a xenon lamp actuated by an electronic circuit. Such a lamp has a power and a light output which is also visible in daylight, this for increased safety.

In a preferred embodiment, the electronic circuit actuates the xenon lamp at a frequency between 60 and 120 flashes per minute, i.e. 1.5 Hz ± 0.5 Hz. The signal is found to be more readily visible when the xenon lamp is actuated at a frequency, this for increased safety. The frequencies 1.2 ± 0.1 Hz have herein been found to be a preferably suitable value for warning road-users.

In yet another preferred embodiment, the electronic circuit is powered at a voltage between 10 V and 60 V, wherein the radiated power of the lamp is not dependent on the supply voltage on the electronic circuit. Through the use of such an electronic circuit the radiated power does not depend on the supply voltage, which is produced in most cases by the battery of a vehicle. The lighting device thus continues to function optimally and to warn road-users even when the battery is running out of power.

According to a further aspect, the present invention provides a method for lighting a loading flap by arranging thereon a lighting device substantially as described above.

Further advantages and features will be described with reference to the accompanying figures, in which:
- fig. 1 shows a perspective view of a loading flap on which a lighting device according to the present invention is arranged in a first preferred embodiment;
- fig. 2 shows a perspective view of the lighting device of fig. 1, designated with II;
- fig. 3 is a schematic top view of the lighting device of fig. 2;
- fig. 4 shows a side view of the lighting device of fig. 1, designated with II;
- fig. 5A shows a perspective top view of a lighting device according to the present invention in a second preferred embodiment;
- fig. 5B shows a perspective bottom view of the lighting device of fig. 5A;
- fig. 6A shows a diagram of a first part of an electric circuit for actuating a lighting device according to the present invention in a first preferred embodiment; and
- fig. 6B shows a diagram of a second part of the electric circuit of fig. 6A.

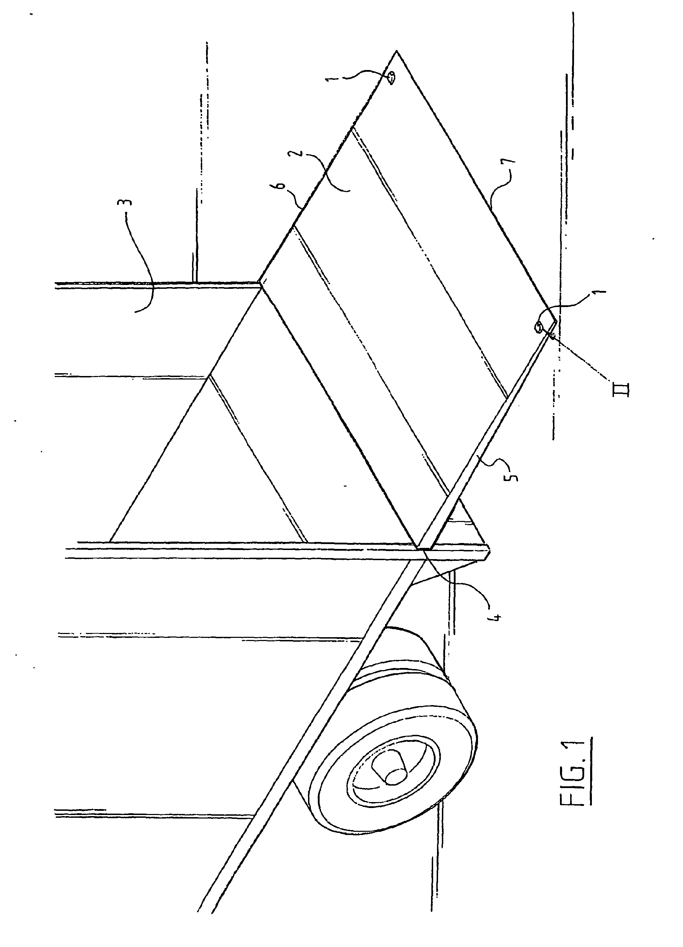

A lighting device 1 according to the present invention is arranged on a loading flap 2 on a vehicle, for instance a truck 3, for lighting thereof. Such a lighting function is important when the loading flap 2 is rotated from a closed position about rotation axis 4 to an open position as shown in fig. 1. Loading flap herein leaves open a rear side of truck 3 which can then be loaded or unloaded in simple manner, wherein the loading flap can carry goods upward or downward in vertical direction. A loading flap 2 comprises a roughly rectangular plate-like member with relatively sharp side edges 5, 6 and rear edge 7. The loading flap is usually of metal, optionally strengthened with strengthening beams on the underside thereof, so that edges 5, 6, 7 are relatively hard and sharp. In the open position shown in fig. 1 the loading flap is herein situated at about 1 to 1.5 m above a ground surface, so that a road-user who collides with or runs up against one of the edges 5, 6, 7 can suffer serious injuries. Lighting device 1 according to the present invention prevents such accidents by warning other road-users.

Lighting device 1 comprises a base member 10 for arranging of the device on loading flap 2 therewith and for arranging the other components thereon. The upper side of base member 10 is covered by means of a cover 12, for instance an aluminium plate element with curved side edges which is connected to the base member over about half the periphery thereof, for instance by welding or glueing at the contact surface 14 between the cover and the base member. A window 16 of light-transmitting material is arranged between the cover and the base member. Window 16 is relatively low and wide, has a curved form and extends uninterrupted over more than a quarter of the periphery of the base member. Window 16 preferably extends over more than 100 to 180°, and more preferably over about 120 to 150° of the periphery of the base member. Openings 18, 20, 22 are further arranged through which bolts can be placed for fastening lighting device 1 therewith to a surface. In addition, device 1 is watertight.

Lighting device 1 further comprises a lamp 24 arranged on the base member for emitting light through window 16. Behind the lamp there is preferably arranged a mirror element 26 with a form suitable for beaming the light emitted by lamp 24 in order to increase the light power transmitted through window 16. Mirror element 26 herein has an appropriate form which is for instance a C-form, V-form or, in the shown preferred embodiment, a W-form. It is also possible to provide the mirror with more than two angles - as in the W-form - in order to cause the light emitted by the lamp to fan out over a wider angle.

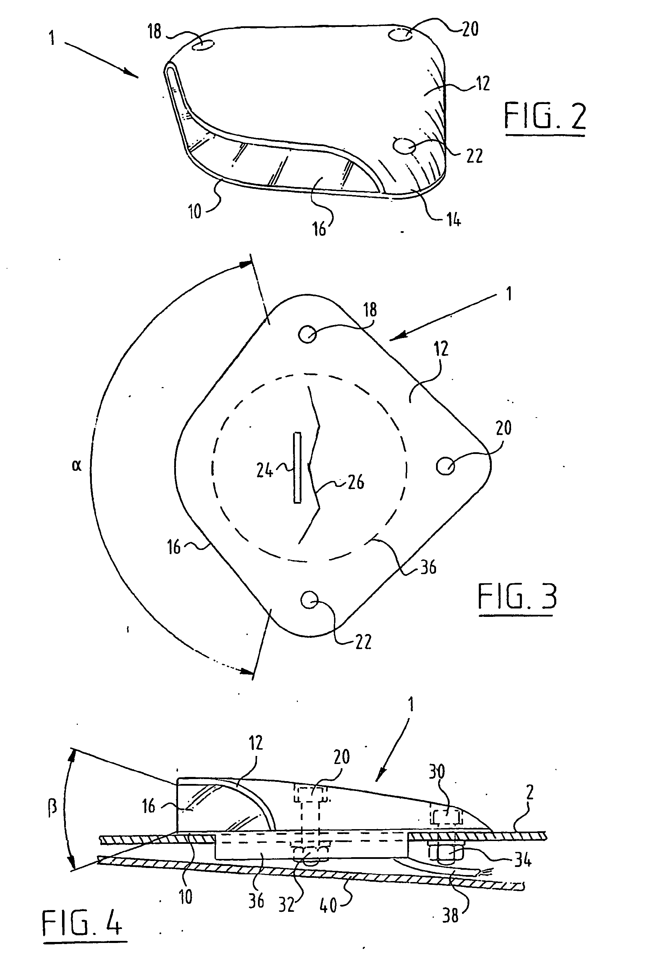

The light emitted by lamp 24 makes an angle α in the width direction of window 16. This angle α is preferably greater than 120°, so that road-users are warned in both lateral and rearward direction when the lighting device is mounted on a loading flap 2. In the loading flap 2 of fig. 1, this means that, by arranging two lighting devices 1 close to corner points of the loading flap, light is emitted in the direction of rear edge 7 as well as in the direction of side edges 5 and 6. It is of course possible to opt for a larger angle α in a range between 120° and 180°, with a preference for an angle α of 150° (fig. 3).

Lighting device 1 can be mounted on a loading flap 2 by means of bolts 28, 30 passing through holes 18, 20, 22 and associated nuts 32, 34. Base member 10 comprises a cylindrical protrusion 36 in which an electronic circuit for actuating lamp 24 is arranged. The electronic circuit is connected by means of wiring 38 to an electric power source, such as the battery of the vehicle. Protrusion 36 is concealed from view by strengthening element 40 of loading flap 2. The light emitted by lighting device 1 makes an angle β of less than 60° with the height direction of window 16. Such an angle in height direction is found to be suitable for preventing the person loading or unloading the truck from being dazzled by the emitted light. The angle β is preferably 40°. The solid angle of the beam of emitted light is defined by angles α and β in respectively the width and height direction of the loading flap.

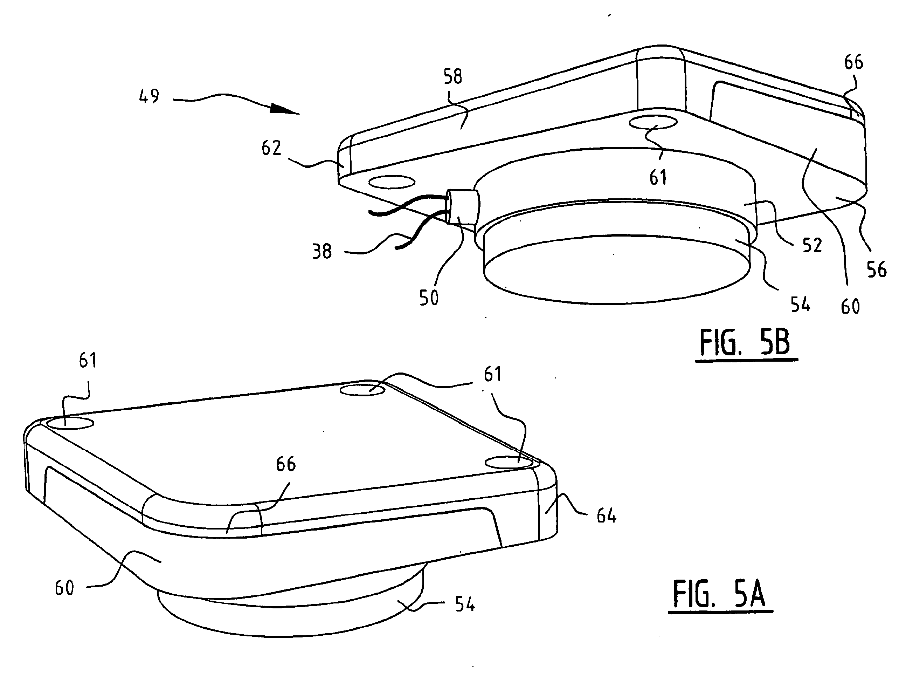

In a second preferred embodiment the difference lies substantially in the form of the elements, wherein corresponding elements are designated with corresponding reference numerals (fig. 5). Wiring 38 enters at a connecting point 50, reinforced by a rubber ring, of a protrusion consisting of a first cylindrical part 52 and a second cylindrical part 54, wherein the part 54 has a smaller diameter than part 52. Base member 56 is connected to protrusion 52, and on the other side thereof cover part 58 is arranged in glued or welded manner. Window 60 of light-transmitting plastic is arranged between cover 58 and base member 56. Openings 62 are further arranged for fixing of the device 49 therethrough.

In a practical embodiment the window is of for instance orange or red light-transmitting plastic. The cover is about 5 mm to 40 mm high and has a width and length in the order of 10 cm. Corner point 62 has a radius of curvature of 12 mm, corner point 64 has a radius of curvature in the order of 17.5 mm, and corner point 66 and the window have a radius of curvature in the order of 35 mm.

The lamp is preferably a xenon lamp which is actuated by means of an electronic circuit. The electronic circuit brings the supply voltage to the desired level for actuating the lamp, whereby the operation of the lighting device is not dependent on the supply voltage. The supply voltage preferably lies between 10 V and 60 V, but can likewise be higher, depending on the output voltage of available or widely used batteries. Common voltages are for instance 12 V, 24 V and 48 V. The lighting device thus continues to function when the supply voltage decreases, wherein light output and frequency remain the same.

It has been found that the emitted light signal is more readily noticed if this signal is pulsed. Frequencies between 1 and 2 Hz, but preferably of about 1.2 ± 0.1 Hz are found to be suitable. The light power produced by the xenon lamp is here strong enough to be visible in daylight, which contributes toward greater safety. The xenon lamp herein has a relatively low power in the order of 2 W, so that the power of the supply battery is saved. This is advantageous when the battery is not being recharged, for instance in the case of a truck whose engine is switched off.

A further advantage of the xenon lamp according to the present invention are the dimensions, which are smaller than known xenon lamps with actuating circuit. The lighting device provided with xenon lamp according to the invention is about 100 mm wide and 100 mm deep, with a height of about 40 mm. A part of the device is recessed into the platform or loading flap, for instance with a height of 18 mm, wherein the part of the device protruding above the surface of the loading flap is a maximum of 25 mm high.

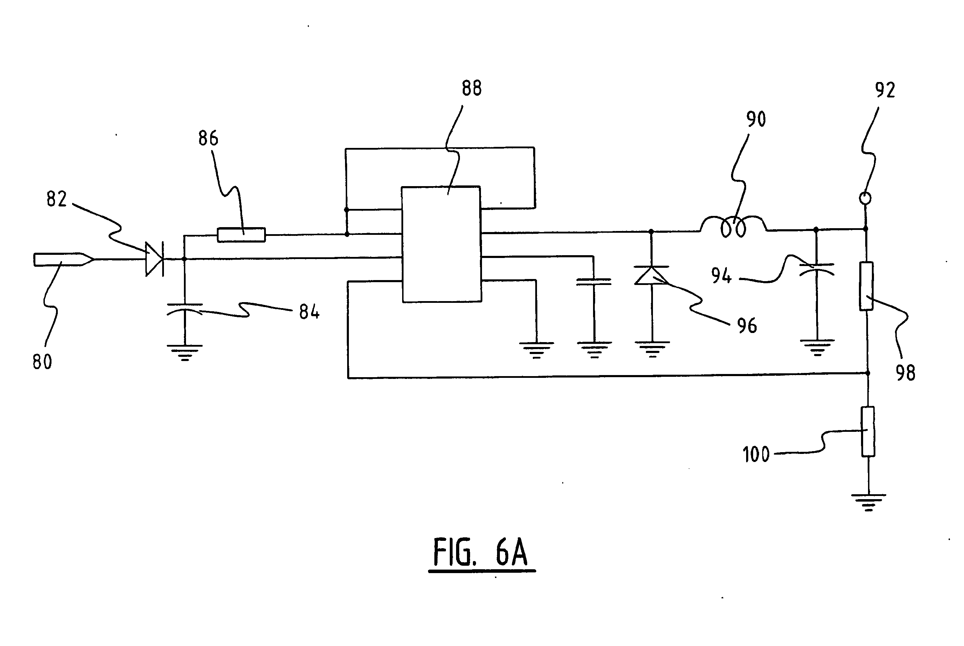

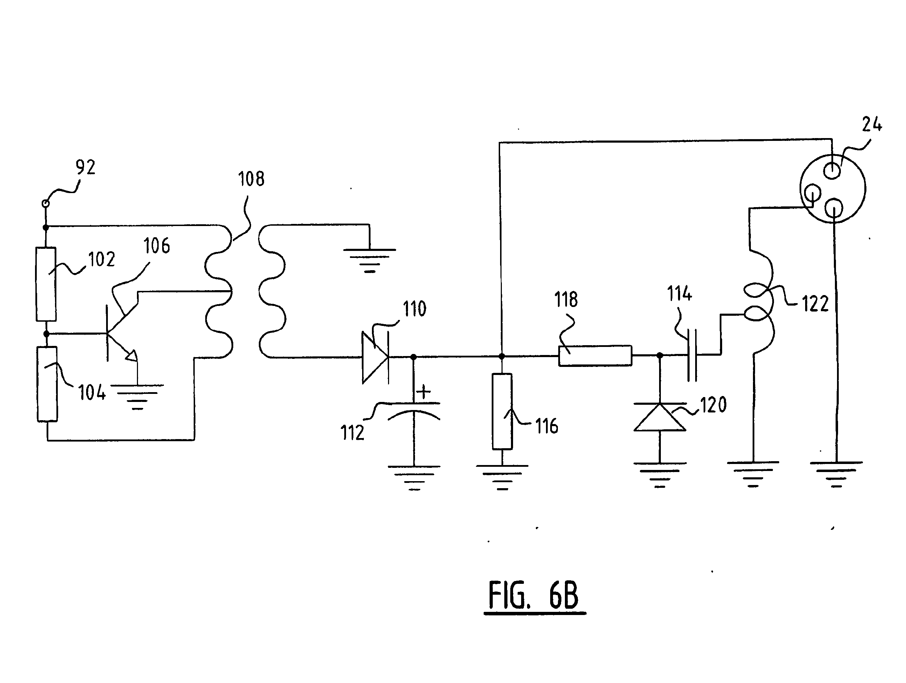

A printed circuit board which is arranged in the first cylindrical part 52 and on which the electric circuit shown in figures 6A and 6B is arranged has a cross-section in the order of 65 mm, wherein a recess for cabling is also arranged in the centre thereof. These relatively small dimensions - which are possible due to the components applied in the electric circuit (figures 6A, 6B) - make the lighting device with xenon lamp and actuating circuit according to the present invention suitable for a loading flap of a truck.

The lamp can also be an incandescent lamp or a LED, although these have a lower light output than a xenon lamp, whereby the light emitted during the day is less good or not visible at all. An incandescent lamp is found to be vulnerable here, and to have a more limited lifespan. In addition, a LED and an incandescent lamp have a higher energy consumption at the same light output, about 5 W and 20 W respectively, compared to the above stated 2 W for a xenon lamp.

The window is not interrupted by for instance strengthening columns of another material. In a further practical embodiment, the window is manufactured from polycarbonate and has a thickness in the order of 3 mm. The thickness and the material ensure that the window is so strong that the device according to the present invention can withstand a load of 180 times 250 kg wheel pressure without damage. The flash of the xenon lamp is so bright that it is visible in daylight through the window of 3 mm.

The electronic circuit (fig. 6A) is powered by a supply voltage 80, supplied for instance by the battery of a vehicle. The supply voltage is conducted via diode 82, capacitors 84 and 86 to microcontroller 88 which generates an output voltage with a level of a determined value, irrespective of the supply voltage 80. The output voltage is conducted via coil 90 to terminal 92, wherein capacitor 94 and diode 96 filter possible changes in voltage. Further arranged is the voltage divider consisting of resistors 98, 100.

The direct voltage of a predetermined level at terminal 92 is fed, via a voltage divider consisting of resistors 102, 104, to the base of transistor 106 arranged for the purpose of switching transformer 108 (fig. 6B). This latter brings the voltage to a level suitable for actuating lamp 24. This voltage is conducted to lamp 24 via diode 110, wherein capacitors 112, 114 are arranged for filtering the signal, in addition to resistors 116, 118 for holding the actuating voltage at the correct value. The start circuit further comprises diode 120 and coil 122. Microcontroller 88 can be preset so as to cause a square-wave voltage at output 92 for the purpose of actuating lamp 24 in a desired frequency.

The advantages of the lighting device according to the present invention are summarized as follows. The lighting device produces a wider light beam which can be seen from multiple directions, which increases safety. Also for this purpose, the window is uninterrupted over a considerable part of the periphery of the device. The angle of elevation is herein limited, so that the light is screened off for the person loading or unloading a truck. The lamp used has a greater light intensity over a wide area of practically the whole width, so that the emitted light is also visible in daytime. A xenon lamp provided with an electric actuating circuit which is small enough to mount on a loading flap of a truck produces the desired light intensity at a lower power, so that the power supply lasts longer. The light intensity also remains constant when the supply voltage decreases.

The present invention is not limited to the above described preferred embodiments thereof, in which many modifications are possible within the scope of the appended claims.

## Claims

1. Device comprising:
- a loading flap (2);
- a lighting device (1, 49), provided with a base member (10, 56) for arranging thereof on the loading flap (2) and a lamp (24) arranged on the base member (10, 56);
- a cover (12, 58) arranged over the lamp (24) for covering thereof; and
- a light-transmitting window (16, 60) arranged over at least a quarter and at maximum half of the periphery of the base member (10, 56) and the cover (12, 58) for the purpose of defining a desired angle for an exiting light beam,
said angle ranging in width direction of the window from 120° to 180° and extending substantially in the plane of the loading flap (2) to both the rear and side direction thereof.

2. Device as claimed in claim 1, also comprising a mirror element (26) arranged on a rear side of the lamp (24) for reflecting in the direction of the window (16, 60) the light emitted by the lamp (24).

3. Device as claimed in claim 2, wherein the mirror element (26) has at least two angles in order to cause the light emitted by the lamp (24) to fan out over a wider angle.

4. Device as claimed in claim 1, wherein the window (16, 60) is arranged over more than 100° of the periphery of the base member (10, 56).

5. Device as claimed in claim 1, wherein the window (16, 60) is arranged over about 150° of the periphery of the base member (10, 56).

6. Device as claimed in any of the foregoing claims, wherein the window (16, 60) is uninterrupted.

7. Device as claimed in any of the foregoing claims, wherein the window (16, 60) has a height of between 5 mm and 40 mm.

8. Device as claimed in any of the claims 1-7, wherein the angle in height direction of the window (16, 60) makes an angle of less than 60°.

9. Device as claimed in any of the foregoing claims, wherein the cover (12, 58) is of aluminium.

10. Device as claimed in any of the foregoing claims, wherein the lamp (24) is a xenon lamp actuated by an electronic circuit.

11. Device as claimed in claim 10, wherein the electronic circuit actuates the xenon lamp at a frequency between 60 and 120 flashes per minute, or 1.5 ± 0.5 Hz.

12. Device as claimed in claim 10 or 11, wherein the electronic circuit is powered at a voltage between 10 V and 60 V, wherein the radiated power of the lamp (24) is not dependent on a supply voltage.

13. Device as claimed in any of the foregoing claims, wherein the lamp (24) is an incandescent lamp or a LED.

14. Lighting device for a loading flap, said lighting device being provided with a base member (10, 56) for arranging thereof on the loading flap (2) and a lamp (24) arranged on the base member (10, 56);
- a cover (12, 58) arranged over the lamp (24) for covering thereof; and
- a light-transmitting window (16, 60) arranged over at least a quarter and at maximum half of the periphery of the base member (10, 56) and the cover (12, 58) for the purpose of defining a desired angle for the exiting light beam,
said angle ranging in width direction of the window from 120° to 180° and extending substantially in the plane of the loading flap (2) to both the rear and side direction thereof.

15. Method for lighting a loading flap (2) by arranging thereon a lighting device (1, 49) as claimed in any of the claims 1-14.

## Patentansprüche

1. Vorrichtung mit:
- einer Ladeklappe (2);
- einer Beleuchtungsvorrichtung (1, 49), die mit einem Basisbauteil (10, 56) zur Anordnung derselben auf der Ladeklappe (2) und einer auf dem Basisbauteil (10, 56) angeordneten Lampe (24) ausgestattet ist;
- einer Abdeckung (12, 58), die über der Lampe (24) zum Abdecken derselben angeordnet ist; und
- einem lichtdurchlässigen Fenster (16, 60), das über wenigstens ein Viertel und maximal der Hälfte des Umfangs des Basisbauteils (10, 56) und der Abdeckung (12, 58) angeordnet ist, um einen gewünschten Winkel für einen austretenden Lichtstrahl zu definieren,
wobei der Winkel in Richtung der Breite des Fensters von 120° bis 180° reicht und sich im Wesentlichen in der Ebene der Ladeklappe (2) sowohl in der rückwärtigen als auch in der seitlichen Richtung derselben erstreckt.

2. Vorrichtung nach Anspruch 1, auch mit einem Spiegelelement (26), das auf einer Rückseite der Lampe (24) angeordnet ist, um das von der Lampe (24) emittierte Licht in Richtung des Fensters (16, 60) zu reflektieren.

3. Vorrichtung nach Anspruch 2, bei der das Spiegelelement (26) wenigstens zwei Winkel aufweist, um zu bewirken, dass sich das von der Lampe (24) emittierte Licht über einen größeren Winkel auffächert.

4. Vorrichtung nach Anspruch 1, bei der das Fenster (16, 60) über mehr als 100° des Umfangs des Basisbauteils (10, 56) angeordnet ist.

5. Vorrichtung nach Anspruch 1, bei der das Fenster (16, 60) über etwa 150° des Umfangs des Basisbauteils (10, 56) angeordnet ist.

6. Vorrichtung nach einem der vorherigen Ansprüche, bei der das Fenster (16, 60) nicht unterbrochen ist.

7. Vorrichtung nach einem der vorherigen Ansprüche, bei der das Fenster (16, 60) eine Höhe zwischen 5 mm und 40 mm hat.

8. Vorrichtung nach einem der Ansprüche 1 bis 7, bei der der Winkel in Richtung der Höhe des Fensters (16, 60) einen Winkel von weniger als 60° bildet.

9. Vorrichtung nach einem der vorherigen Ansprüche, bei der die Abdeckung (12, 58) aus Aluminium ist.

10. Vorrichtung nach einem der vorherigen Ansprüche, bei der die Lampe (24) eine durch einen elektronischen Schaltkreis angesteuerte Xenon-Lampe ist.

11. Vorrichtung nach Anspruch 10, bei der der elektronische Schaltkreis die Xenon-Lampe bei einer Frequenz zwischen 60 und 120 Lichtblitze pro Minute oder 1,5 ± 0,5 Hz angesteuert wird.

12. Vorrichtung nach Anspruch 10 oder 11, bei der der elektronische Schaltkreis bei einer Spannung zwischen 10 V und 60 V mit Leistung versorgt wird, wobei die abgestrahlte Leistung der Lampe (24) nicht von einer Versorgungsspannung abhängt.

13. Vorrichtung nach einem der vorherigen Ansprüche, bei der die Lampe (24) eine Glühlampe oder eine LED ist.

14. Beleuchtungsvorrichtung für eine Ladeklappe, wobei die Beleuchtungsvorrichtung ausgestattet ist mit einem Basisbauteil (10, 56) zur Anordnung derselben auf der Ladeklappe (2) und einer auf dem Basisbauteil (10, 56) angeordneten Lampe (24) ausgestattet ist;
- einer Abdeckung (12, 58), die über der Lampe (24) zum Abdecken derselben angeordnet ist; und
- einem lichtdurchlässigen Fenster (16, 60), das über wenigstens ein Viertel und maximal der Hälfte des Umfangs des Basisbauteils (10, 56) und der Abdeckung (12, 58) angeordnet ist, um einen gewünschten Winkel für den austretenden Lichtstrahl zu definieren,
wobei der Winkel in Richtung der Breite des Fensters von 120° bis 180° reicht und sich im Wesentlichen in der Ebene der Ladeklappe (2) sowohl in der rückwärtigen als auch in der seitlichen Richtung derselben erstreckt.

15. Verfahren zum Beleuchten einer Ladeklappe (2), indem darauf eine Beleuchtungsvorrichtung (1, 49) wie in einem der Ansprüche 1 bis 14 beansprucht angeordnet wird.

## Revendications

1. Dispositif comprenant :
- une plate-forme de chargement (2) ;
- un dispositif d'éclairage (1, 49) muni d'un élément de base (10, 56) pour l'agencement de ce dernier sur la plate-forme de chargement (2) et une lampe (24) agencée sur l'élément de base (10, 56) ;
- un couvercle (12, 58) agencé sur la lampe (24) pour recouvrir cette dernière ; et
- une fenêtre de transmission de lumière (16, 60) agencée sur au moins un quart et au maximum la moitié de la périphérie de l'élément de base (10, 56) et du couvercle (12, 58) afin de définir un angle souhaité pour un faisceau de lumière émis,
ledit angle étant compris dans le sens de la largeur de la fenêtre dans un intervalle allant de 120 ° à 180 ° et s'étendant sensiblement dans le plan de la plate-forme de chargement (2) à la fois dans la direction arrière et latérale de celle-ci.

2. Dispositif selon la revendication 1, comprenant également un élément de miroir (26) agencé sur un côté arrière de la lampe (24) pour réfléchir dans la direction de la fenêtre (16, 60) la lumière émise par la lampe (24).

3. Dispositif selon la revendication 2, dans lequel l'élément de miroir (26) présente au moins deux angles afin de faire en sorte que la lumière émise par la lampe (24) se diffuse sous un angle plus important.

4. Dispositif selon la revendication 1, dans lequel la fenêtre (16, 60) est agencée sous un angle de plus de 100 ° de la périphérie de l'élément de base (10, 56).

5. Dispositif selon la revendication 1, dans lequel la fenêtre (16, 60) est agencée sous un angle d'environ 150 ° de la périphérie de l'élément de base (10, 56).

6. Dispositif selon l'une quelconque des revendications précédentes, dans lequel la fenêtre (16, 60) est ininterrompue.

7. Dispositif selon l'une quelconque des revendications précédentes, dans lequel la fenêtre (16, 60) a une hauteur comprise entre 5 mm et 40 mm.

8. Dispositif selon l'une quelconque des revendications 1 à 7, dans lequel l'angle dans le sens de la hauteur de la fenêtre (16, 60) représente un angle de moins de 60 °.

9. Dispositif selon l'une quelconque des revendications précédentes, dans lequel le couvercle (12, 58) est composé d'aluminium.

10. Dispositif selon l'une quelconque des revendications précédentes, dans lequel la lampe (24) est une lampe au xénon actionnée par un circuit électronique.

11. Dispositif selon la revendication 10, dans lequel le circuit électronique actionne la lampe au xénon à une fréquence comprise entre 60 et 120 éclats par minute, ou 1,5 ± 0,5 Hz.

12. Dispositif selon la revendication 10 ou 11, dans lequel le circuit électronique est alimenté par une tension comprise entre 10 V et 60 V, la puissance rayonnée de la lampe (24) ne dépendant pas d'une tension d'alimentation.

13. Dispositif selon l'une quelconque des revendications précédentes, dans lequel la lampe (24) est une lampe à incandescence ou une DEL.

14. Dispositif d'éclairage d'une plate-forme de chargement, ledit dispositif d'éclairage étant pourvu d'un élément de base (10,56) pour l'agencement de celui-ci sur la plate-forme de chargement (2) et d'une lampe (24) agencée sur l'élément de base (10,56) ;
- un couvercle (12,58) agencé sur la lampe (24) pour la recouvrir, et
- une fenêtre de transmission de lumière (16,60) agencée sur au moins un quart et au maximum la moitié de la périphérie de l'élément de base (10,56) et du couvercle (12,58) dans le but de définir un angle souhaité pour le faisceau de lumière émise,
ledit angle s'étendant dans la direction de largeur de la fenêtre de 120° à 180° et s'étendant sensiblement dans le plan de la plate-forme de chargement (2) et dans les directions arrière et latérale de celle-ci.

15. Procédé d'éclairage d'une plate-forme de chargement (2) grâce à l'agencement sur cette dernière d'un dispositif d'éclairage (1, 49), selon l'une quelconque des revendications 1 à 14.
